(19) Europäisches Patentamt
European Patent Office
Office européen des brevets

(11) **EP 4 201 221 A1**

(12) **EUROPEAN PATENT APPLICATION**

(43) Date of publication:
**28.06.2023  Bulletin 2023/26**

(21) Application number: **21217557.4**

(22) Date of filing: **23.12.2021**

(51) International Patent Classification (IPC):
**A23K 10/30** $^{(2016.01)}$    **A23K 10/37** $^{(2016.01)}$
**A23K 20/147** $^{(2016.01)}$   **A23K 20/163** $^{(2016.01)}$
**A23K 50/10** $^{(2016.01)}$

(52) Cooperative Patent Classification (CPC):
**A23K 10/37; A23K 10/30; A23K 20/147;
A23K 20/163; A23K 50/10**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borregaard AS
1721 Sarpsborg (NO)**

(72) Inventor: **The designation of the inventor has not
yet been filed**

(74) Representative: **Wallinger Ricker Schlotter
Tostmann
Patent- und Rechtsanwälte mbB
Zweibrückenstraße 5-7
80331 München (DE)**

(54) **RUMINANT FEED OR SUPPLEMENT FOR RUMINANT FEED AND PROCESS FOR PREPARING
THE SAME**

(57)    The present invention relates to a process for the production of a ruminant feed or a supplement for a ruminant
feed and to a ruminant feed or supplement for a ruminant feed prepared by the inventive process.

**Fig. 1**

**Description**

**FIELD OF THE INVENTION**

The present invention relates to a novel process for the production of a ruminant feed or a supplement for a ruminant feed as well as to a ruminant feed or a supplement for a ruminant feed obtained by the inventive process.

**BACKGROUND OF THE INVENTION**

Plant-based protein is an essential source of amino acids for ruminants (herbivorous grazing mammals). As protein comes into the rumen (a stomach of the ruminants), the protein is broken down into peptides and then further digested into amino acids. The amino acids available to ruminal microbes are utilized directly or deaminated to yield carbon skeletons and ammonia.

Cows need nutrients to produce milk and the ruminal microbes provide them with both energy and protein as they digest their food, particularly grass. If cows are to produce more milk, they need nutrients beyond what the microbes can supply. Typical dietary supplements are corn for energy and soybean meal for protein. The cow can digest these feedstuffs, but so can the ruminal microbes, which will digest about 60% of the protein in soybean meal, breaking it down to ammonia, and then using it to synthesize their own microbial protein. As the level of supplemental soybean meal increases, the bacteria continue to digest it, but are unable to keep up with re-synthesizing their protein. Ammonia then builds up in the rumen and moves into the bloodstream, increasing the levels also in the urine and milk, which indicates a waste of protein.

Hence, a common problem is that a large part of the valuable proteins is broken down already in the rumen and, thus, far too early in the digestive system to be fully utilized for milk and meat production. Therefore, modified proteins that are not degraded in the rumen but remain digestible to the ruminant itself (referred to as "rumen-bypass proteins", "bypass protein", "rumen undegradable protein", or the like) are highly sought-after and have been developed in the recent years. In the lower gut, the bypass protein is then digested by enzymatic hydrolysis. Supplementation of this type of protein can improve productivity in terms of improved efficiency of meat, milk, and wool or hair production.

Different approaches for protecting proteins from rumen degradation, such as heat treatment, formaldehyde treatment, or chemical treatment with reducing sugars in a Maillard reaction (also referred to herein as the "Maillard reaction-based approach") have been developed. These methods are thought to act either by inhibiting proteolytic activity and/or by modifying protein structure in such a way that the number of protease specific bonds that can be cleaved by microbial enzymes is decreased.

However, while the prior art methods described above may be economical under some circumstances, it is important to achieve the maximum cost saving and optimal utilization of total feedstock such as by increasing the efficiency with which protein is used by the animal. In general, the prior art methods fall short of these goals and/or show other drawbacks.

For example, heat treatment of protein is the physical processes to reduce degradability and involves the use of dry heating, autoclaving (e.g. 15 min at 120-130 °C), and extrusion procedures. This method can change the structure of proteins in such a way that the proteins become less soluble, thereby lowering concentrations of ammonia in the rumen. However, heat treatment is sensitive and too little heat will not provide protection while too much heat will render the protein undigestible in the lower digestive tract.

Formaldehyde treatment, although effective in protecting the protein against rumen degradation, may negatively affect digestibility once in the small intestine. Further, due to its toxicity, it is generally desirable to avoid the use of formaldehyde. Further, the use of formaldehyde is restricted by regulations, in most jurisdictions.

Further, in the prior art methods where reducing sugars are utilized in a Maillard reaction between proteins and reducing sugars, the reducing sugars are usually added based on an external source, which renders the sourcing and logistics of suitable streams of reducing sugars highly complicated and costly. Further, since transportation is always associated with the emission of greenhouse gases, externally sourcing the reducing sugars also increases the "$CO_2$ footprint" of the final ruminant feed and is considered environmentally undesirable.

Another important factor is the digestibility of the cellulose comprised in the feed. Animal feed compositions are usually comprised of an easily degradable fraction and a fiber-rich less readily degradable fraction (named roughage). For example, roughage may be from grain and then usually consists of the outer covering of the grain. Examples of roughage include soybean hulls, oat hulls, corn cob fractions, wheat bran, rice hulls, and the like. Ruminants can feed upon and digest cellulose obtained from a variety of plant sources due to the presence of cellulolytic enzymes in the rumen of the animal. However, the ability of the cellulolytic enzymes to degrade cellulose varies considerably according to the nature and origin of the cellulose-containing substrate and the digestible energy content of animal feed compositions is often unsatisfactory.

**SUMMARY OF THE PRESENT INVENTION**

It is an object of the present invention to overcome all or some of the above-mentioned drawbacks. In particular, it is an object of the present invention to provide for a ruminant feed or a supplement for a ruminant feed that comprises rumen-bypass proteins (i.e. modified proteins that are not degraded in the rumen but remain digestible to the ruminant itself). In particular, it is an object of the present invention to provide for a ruminant feed or supplement for a ruminant feed that can easily be produced in a cost-efficient, sustainable, high raw material utilizing and environmentally friendly manner. Further, it is an object to provide for a ruminant feed or a supplement for a ruminant feed that has a high digestible energy content.

These objects have been solved by the claimed process for the production of a ruminant feed or a supplement for a ruminant feed. In particular, the inventors of the present invention have found that lignocellulosic raw materials that are readily available at a feed production site but are typically disposed or added as roughage to animal feeds (such as soybean hulls, wheat bran, rice hulls, corn bobs, and the like) can be efficiently used for producing reducing sugars, which can then be used for the production of rumen-bypass proteins according to a Maillard reaction-based approach.

For example, it has been found that a soybean hull stream present at a typical soybean crusher site / feed production site contains more than enough pentoses to convert the whole soybean meal stream into rumen bypass proteins. Typically, soybean hulls are considered as a low value by-product and are very often simply disposed. However, the present invention now allows to convert this low value by-product into a high value ruminant feed product.

Further, it has been found that the step of subjecting the lignocellulosic biomass to hydrolysis not only leads to the production of monomeric reducing sugars, which can then be used for the production of the rumen-bypass proteins, but also to the production of cellulose fibers with increased digestible energy.

Therefore, the present invention allows for a process for the production of a ruminant feed or a supplement for a ruminant feed where the same species of crop can be used for providing (i) the lignocellulosic biomass used for producing reducing sugars and (ii) the protein source.

In particular, the findings of the inventors of the present invention allow for the utilization of a low value stream of hemicellulose rich lignocellulosic biomass originating from the protein-comprising plant for the production of a high value product.

In particular, the findings of the inventors allow for performing all process steps (from the harvested crop up to the final ruminant feed or supplement for a ruminant feed) at the same production site, thereby obviating the need for externally sourced reducing sugars, or any other component. This renders the overall process environmentally friendly and cost-efficient. Further, since the present invention uses lignocellulosic biomass that is very often disposed, the present invention also reduces potential waste disposal problems and maximizes the utilization of the total feedstock.

Further, it has been found that the cost-efficient and environmentally friendly process of the present invention produces a high-quality ruminant feed or supplement for a ruminant feed that not only comprises a high amount of rumen bypass proteins but also a high digestible energy content.

It has particularly been found that the ruminant feed or the supplement for a ruminant feed obtained by the inventive process improves the lactational performance of dairy ruminants.

Thus, the process of the present invention is less complicated, more cost-efficient, and more environmentally friendly than prior art processes without compromising the quality of the feed or supplement thereof in any way.

In a *first aspect*, in accordance with claims 1 -14, the present invention relates to a process for the production of a ruminant feed or a supplement for a ruminant feed.

In a *second aspect,* in accordance with claim 15, the present invention relates to a ruminant feed or a supplement for a ruminant feed obtained by the process according to the present invention.

**FIGURE DESCRIPTION**

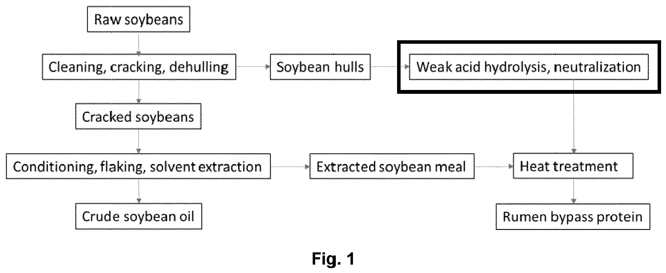

Fig. 1 shows an example of an implementation of the inventive process.

**DETAILED DESCRIPTION OF THE INVENTION**

As noted above, the present invention is based on the surprising finding that reducing sugars useful for the production of rumen-bypass proteins according to a Maillard reaction-based approach can be supplied locally by utilizing raw materials readily available at the feed production site. For example, it has been found that a soybean hull stream present at a typical soybean crusher site / feed production site contains more than enough pentoses to convert the whole soybean meal stream into rumen bypass proteins. Further, it has been found that the step of subjecting the lignocellulosic biomass to hydrolysis not only leads to the production of monomeric reducing sugars, which can then be used for the production of the rumen-bypass proteins, but also to the production of cellulose fibers with increased digestible energy.

These findings allow for an uncomplicated, cost-efficient, and environmentally friendly process for producing a ruminant feed or a supplement for a ruminant feed comprising rumen-bypass proteins and having a high digestible energy content.

In a *first aspect*, the present invention relates to a process for the production of a ruminant feed or a supplement for a ruminant feed, the process comprising the following steps:

(a) subjecting lignocellulosic biomass to hydrolysis, thereby producing a mixture comprising monomeric reducing sugars and cellulose fibers;
(b) optionally (i) adjusting the pH of the mixture obtained from step (a) to a pH of between 4.0 and 10.5, preferably between 6.0 and 9.5, more preferably between 7.0 and 9.5, even more preferably between 7.0 and 8.5, and/or (ii) introducing alkali metal cations and/or alkaline earth metal cations into the mixture obtained from step (a);
(c) blending the mixture obtained from step (a) or the mixture obtained from step (b) with a protein source comprising one or more protein(s);
(d) subjecting the blend obtained from step (c) to heat, thereby inducing a reaction between the monomeric reducing sugars and the one or more protein(s) and thereby producing the ruminant feed or supplement for a ruminant feed,

wherein the lignocellulosic biomass and the protein source stem from the same species of crop.

The term "species of crop", as used herein, refers to a group of crops that can interbreed amongst themselves and bear mutual resemblance. In any case, a skilled person readily understands what a "species of crop" is.

Preferably, the lignocellulosic biomass and the protein source stem from the same crop.

According to a preferred embodiment, the process further comprises a step ($\alpha$) performed prior to step (a). Step ($\alpha$) comprises the following steps: ($\alpha$1) providing one or more batches of harvested crops, preferably one batch; ($\alpha$2) mechanically disintegrating the one or more batches of crops and separating a lignocellulosic biomass stream from a protein source stream.

Step ($\alpha$) is further characterized in that (i) the lignocellulosic biomass used in step (a) is derived from the lignocellulosic biomass stream obtained in step ($\alpha$2) and (ii) the protein source used in step (c) is derived from the protein source stream obtained in step ($\alpha$2). The lignocellulosic biomass stream usually comprises hulls, shells, and the like, and the protein source stream usually comprises the kernel (usually referred to as the "edible" part of a plant).

Preferably, the mechanical disintegration of the one or more batches of crops in step ($\alpha$2) is performed by threshing, winnowing, milling, wet-milling, cracking and/or dehulling the one or more batches of crops.

The reaction between the monomeric reducing sugars and the one or more proteins, which is induced by heat in step (d), is generally known as Maillard reaction and induces non-enzymatic browning of the mixture obtained from (c). "Non-enzymatic" means that no enzymes are necessary for or involved in the reaction between the monomeric reducing sugars and the one or more proteins in step (d).

Preferably, the lignocellulosic biomass subjected to hydrolysis in step (a) has a hemicellulose content of at least 1% w/w, dry matter, preferably at least 5% w/w, more preferably at least 10 w/w. Preferably, the lignocellulosic biomass has a hemicellulose content, preferably a pentose polysaccharide content, more preferably a xylan content, of at least 1% w/w, dry matter, preferably at least 5% w/w, more preferably at least 10 w/w, and a lignin content of 5% w/w to 40% w/w. Preferably, the lignin content is 10% w/w to 35% w/w, more preferably 15% w/w to 30% w/w. The hemicellulose content can be estimated by a sugar content assay based on TAPPI Standard T249 (85th Edition, 2009). By using lignocellulosic biomass with such a hemicellulose content it can be ensured that a sufficient amount of monomeric reducing sugars is generated in step (a). The lignin content can be estimated according to TAPPI Standard T222 (2006 edition).

In accordance with the present invention, the indication % weight / weight means that the weight percentage is relative of the overall weight of the biomass.

As described above, step (a) not only leads to the production of monomeric reducing sugars, which can then be used for the production of rumen-bypass proteins, but also to the production of cellulose fibers with increased digestible energy. Thus, in a preferred embodiment, the cellulose fibers comprised in the mixture obtained in step (a) are cellulose fibers with increased digestible energy compared to that of the fibers in the lignocellulosic biomass. Digestible energy can be determined by subtracting the gross energy in the feces from the gross energy fed to the animal. The gross energy can be measured by determining the total amount of heat produced from the combustion of the feed/feces. Since some of the material excreted in the feces does not originate from feed but from cells sloughed off the gastrointestinal tract as the food passes through, the digestible energy of a certain animal feed is usually only an estimate. However, assuming that the amount of cells sloughed off the gastrointestinal tract as the food passes through remains approximately constant, the digestible energy difference between two animal feeds can be determined within small or at least reasonable errors.

The crop is preferably selected from legumes, cereals, and oil plants. Legumes are preferably selected from beans and soybeans. Cereals are preferably selected from oat, wheat, rise, barley, and corn. Oil plants are preferably selected from rapeseed, linseed, oil palm and sunflower.

As noted above, the inventors of the present invention have found that the reducing sugars can be supplied locally utilizing raw materials readily available at the feed production site. This allows for performing all process steps (from the harvested crop up to the final ruminant feed or supplement for a ruminant feed) at the same production site, which obviates the need for externally sourcing reducing sugars, or any other component, and allows to perform all process steps at the same production site. Thus, in a preferred embodiment, steps (a)-(d) are performed at the same production site. If step (α) is performed, then it is preferred that steps (α) and (a)-(d) are performed at the same production site.

In a preferred embodiment, the lignocellulosic biomass comprises one or more members of the group consisting of legume shells, hulls, pods, stalks or leaves, preferably soybean hulls; peanut shells; oil seed shells, hulls, pods, husks, leaves, straw or stalks, preferably rapeseed pods or rapeseed straw; sesame stalks; sunflower stalks; palm kernel shells; empty fruit bunch; coconut shells or coconut husks; cereal hulls, bran, cobs, leaves, stalks or straw, preferably corn stover or corn cobs; oat hulls; rice hulls; barley straw; wheat bran; wheat straw; sorghum bagasse. Such lignocellulosic biomass is typically added to animal feeds as mere roughage while at the same time reducing sugars are externally sourced. However, as set out above, it has now been found that such low-value lignocellulosic biomass can not only be used as simple roughage but can be directly used for producing reducing sugars, thereby rendering the process more simple, cost-efficient, and environmentally friendly.

In a further preferred embodiment, the lignocellulosic biomass consists of one or more members of the group consisting of soybean hulls, oat hulls, wheat bran, rice hulls, corn cobs, corn stover, palm kernel shells, empty fruit bunches, wheat straw.

Preferably, the hydrolysis of step (a) is acid hydrolysis or enzymatic hydrolysis. It is particularly preferred that the hydrolysis of step (a) is acid hydrolysis. It is further particularly preferred that the hydrolysis of step (a) is acid hydrolysis and a mineral acid and/or a gas is used as the acidic component for driving the hydrolysis reaction. Preferably, the mineral acid is hydrochloric acid or sulfuric acid. The gas is preferably sulfur dioxide.

According to another embodiment of the present invention, the hydrolysis of step (a) is enzymatic hydrolysis and glucoside hydrolases, preferably xylanases (EC 3.2.1.8), are used. Xylanases degrade the linear polysaccharide xylan into xylose monomers, thus breaking down hemicellulose.

Preferably, the hydrolysis step (a) is performed in a manner that maximizes the yield of xylose, preferably D-xylose, and minimizes the degradation of xylose to furfural.

Preferably, the mixture obtained in step (a) comprises (i) pentoses, preferably xylose and/or arabinose, more preferably D-xylose and/or arabinose, and (ii) hexoses, preferably mannose and/or galactose and/or glucose.

In a preferred embodiment, the hydrolysis step (a) includes a combination of (i) acid hydrolysis, preferably dilute acid hydrolysis using diluted sulfuric acid, together with (ii) steam explosion and/or sulfite treatment and/or enzymatic hydrolysis. Preferably, a combination of sulfuric acid treatment (preferably 1-5% w/v, more preferably 1-4% w/v, more preferably 1-3% w/v, more preferably about 2% w/v) and steam explosion (preferably performed at a temperature of 130-150 °C, preferably 135-145 °C) is performed, followed by enzymatic hydrolysis. It has been found that the sulfuric acid and steam explosion treatment increases the effectiveness of the enzymatic hydrolysis to produce reducing sugars.

Preferably, step (b) is performed, i.e. at least one option of step (b) is not optional.

In one embodiment, step (b) comprises the step of adjusting the pH of the mixture obtained from step (a) to a pH of between 4.0 and 10.5, preferably between 6.0 and 9.5, more preferably between 7.0 and 9.5, even more preferably between 7.0 and 8.5 (in the following also referred to as the "pH adjustment step").

In another embodiment, step (b) comprises the step of introducing alkali metal cations and/or alkaline earth metal cations into the mixture obtained from step (a) (in the following also referred to as the "supplementation step").

In a further embodiment, step (b) comprises the pH adjustment step and the supplementation step. In this case, both steps do not need to be performed separately from each other but can be performed simultaneously and, in particular, can be implemented into one single step. This, for example, is the case if alkali metal hydroxides or alkaline metal hydroxides are used for adjusting the pH.

Hence, according to a preferred embodiment, one or more alkali metal hydroxides and/or one or more alkaline metal hydroxides are used for adjusting the pH. Preferably, the alkali metal hydroxides are selected from sodium hydroxide and potassium hydroxide, and the alkaline metal hydroxides are selected from magnesium hydroxide and calcium hydroxide. Further preferably, magnesium hydroxide is used for adjusting the pH.

The addition of alkali metal cations and/or alkaline earth metal cations into the mixture obtained from step (a) is advantageous because such cations have been shown to affect Maillard reactions. The use of magnesium cations is particularly preferred, because Maillard reactions have been shown to be accelerated in the presence of magnesium ions, which is believed to be due to an increased sugar hydrolysis and the reduction of water mobility caused by the salt, counteracting the inhibitory effect of water on the Maillard reaction. It has in addition been proposed that magnesium serves as a Lewis acid catalyst to facilitate Maillard reactions, and that the presence of magnesium ions possibly can facilitate nucleophilic addition reactions between the carbonyl groups and amino groups after Lewis acid activation of the carbonyl group.

In the supplementation step it is preferred that one or more members of the group consisting of sodium ions, potassium ions, magnesium ions, and calcium ions are introduced into the mixture obtained from step (a). Preferably, magnesium ions are introduced into the mixture obtained from step (a) for the reasons set out above

Preferably, the mixture obtained from step (b) has a magnesium ion content of at least 50 ppm. This concentration of magnesium ions has been shown to be particularly advantageous for Maillard reactions.

It is preferred that the mixture obtained from step (b) mainly consists of reducing sugars, unhydrolyzed cellulose fibers, and mineral salts, wherein mainly consists means more than 80% w/w, dry matter, preferably more than 90% w/w, more preferably more than 95% w/w.

Further, it has been found that dietary macro-mineral elements are beneficial for the health and productivity of lactating dairy cows and that the dietary cation-anion difference (DCAD) as well as the proportions of sodium, potassium and magnesium have influences on the outcome. The dietary cation-anion difference (DCAD) is defined as follows:

$$DCAD = meq(Na^+ + K^+) - (Cl^- + SO_4^{2-})/100 \text{ g dietary DM}$$

where meq is milliequivalents, $Na^+$ is sodium cations, $K^+$ is potassium cations, $Cl^-$ is chloride anions, $SO_4^{2-}$ is sulfate anions, and DM is dry matter.

Preferably, the ruminant feed or supplement for a ruminant feed obtained from step (d) has a dietary cation-anion difference (DCAD) of 20 to 60 meq/100g dietary dry mass, preferably 25 to 55 meq/100g dietary dry mass, more preferably 30 to 50 meq/100g dietary dry mass. It is also preferred that the ruminant feed or supplement for a ruminant feed obtained from step (d) comprises potassium ions and sodium ions in an atomic ratio of potassium : sodium of between 1:1 and 5:1, preferably between 1.5:1 and 4:1, more preferably between 1.8:1 and 3.6:1. Furthermore, it is preferred that the ruminant feed or supplement for a ruminant feed obtained from step (d) comprises potassium ions and magnesium ions in a weight ratio of between 3:1 and 5:1, preferably between 3.5:1 and 4.5:1, more preferably between 3.7:1 and 3:1. This turns the resulting product mixture into a dietary supplement for incorporation in ruminant feedstocks, wherein the supplement is adapted to provide sodium, potassium and magnesium cations in calculated proportions to a basal ration. Further, several beneficial effects, namely increased dry matter intake (DMI), increased milk yield (MY) and increased blood bicarbonate, were observed when such feedstock was administered to dairy cows during the early or in mid lactation phase.

The protein source preferably comprises or consists of one or more members of the group consisting of: legume meals, preferably bean meal, more preferably soybean meal; peanut meal; oil seed meals or cakes, preferably rapeseed meal; cottonseed meal; linseed meal; safflower meal; sesame meal; sunflower seed meal; palm kernel cake; copra; cereals, barley; oat, corn; wheat; milo; sorghum; by-product protein feedstuffs, preferably corn gluten feed; distiller's grains; brewers' spent grain; silages; hays; alfalfa.

Particularly preferably, the protein source comprises or consists of bean meal, preferably soybean meal, oil seed meal, preferably rapeseed meal or by-product protein feedstuff, preferably corn gluten feed.

Preferably, the one or more proteins comprise lysine.

Preferably, the one or more proteins comprised in the protein source comprise lysine and the blend obtained from step (c) comprises a molar ratio of reducing sugars to lysine of 0.3:1 to 1:1. It has surprisingly been found that this amount of reducing sugars is sufficient for forming the rumen bypass protein.

Preferably, the reducing sugars are pentoses, preferably xylose and/or arabinose, more preferably D-xylose and/or arabinose, and the one or more proteins comprised in the protein source comprise lysine, and the molar ratio of pentose to lysine is at least 1. The use of xylose or arabinose in combination with lysine has been found to be particularly beneficial.

The skilled person is able to select the temperature and duration of step (d) of the process according to the present invention according to the actual needs. However, it has been found that step (d) is preferably performed at a temperature of 20 to 150 °C, preferably 70 to 120 °C, more preferably 85 to 105 °C. Further, it has been found that step (d) is preferably performed for a time period of 20 minutes to 72 hours, preferably 40 minutes to 8 hours, more preferably 1 hour to 4 hours.

Further, it has been found that the amount of water affects the reaction of step (d) and that it is particularly advantageous if the blend obtained from step (c) that is subjected to heat treatment in step (d) has a moisture content of 6% to 40%, preferably 10% to 32%, more preferably 15% to 25%.

Furthermore, it has been found that the inventive process does not require for any separation, fractionation, or purification of the mixture obtained from step (a) before it is subjected to step (b) or (c). Thus, according to a preferred embodiment, the mixture obtained from step (a) is not subjected to separation, fractionation, or purification before it is subjected to step (b) or step (c). This keeps down operating costs.

Moreover, preferably, no spent sulfite liquor or dried spent sulfite liquor is used in the process. It is also preferred that no formaldehyde is used in the process.

According to a preferred embodiment, step (b) is absent and no other step is performed between steps (a) and (c).

According to another preferred embodiment, step (b) is absent and no other step is performed between steps (c) and (d).

According to another preferred embodiment, step (b) is absent and no other step is performed between steps (a) and (c) and between steps (c) and (d).

According to another preferred embodiment, step (b) is present and no other step is performed between steps (a) and (b).

According to another preferred embodiment, step (b) is present and no other step is performed between steps (b) and (c).

According to another preferred embodiment, step (b) is present and no other step is performed between steps (c) and (d).

According to another preferred embodiment, step (b) is present and no other step is performed between steps (a) and (b), and between steps (b) and (c), and between steps (c) and (d).

It is also generally preferred that no other step is performed between steps (c) and (d), irrespective of whether step (b) is present or absent.

In a *second aspect*, the present invention relates to a ruminant feed or a supplement for a ruminant feed obtained or obtainable by the inventive process. The inventive ruminant feed or a supplement for a ruminant feed comprises cellulose fibers with an increased digestible energy compared to that of fibers of typical lignocellulosic biomass.

The preferred features described above in the context of the inventive method also apply for the second aspect.

The present invention is now further described by means of the following items:

Item 1. A process for the production of a ruminant feed or a supplement for a ruminant feed, the process comprising the following steps:

(a) subjecting lignocellulosic biomass to hydrolysis, thereby producing a mixture comprising monomeric reducing sugars and cellulose fibers;

(b) optionally (i) adjusting the pH of the mixture obtained from step (a) to a pH of between 4.0 and 10.5, preferably between 6.0 and 9.5, more preferably between 7.0 and 9.5, even more preferably between 7.0 and 8.5, and/or (ii) introducing alkali metal cations and/or alkaline earth metal cations into the mixture obtained from step (a);

(c) blending the mixture obtained from step (a) or the mixture obtained from step (b) with a protein source comprising one or more protein(s);

(d) subjecting the blend obtained from step (c) to heat, thereby inducing a reaction between the monomeric reducing sugars and the one or more protein(s) and thereby producing the ruminant feed or supplement for a ruminant feed,

wherein the lignocellulosic biomass and the protein source stem from the same species of crop.

Item 2. The process according to Item 1, wherein the lignocellulosic biomass and the protein source stem from the same crop.

Item 3. The process according to Item 1 or 2, wherein the process further comprises a step ($\alpha$) performed prior to step (a), wherein step ($\alpha$) comprises the following steps:

($\alpha$1) providing one or more batches of crops, preferably one batch of crops;

($\alpha$2) mechanically disintegrating, preferably threshing, winnowing, milling, wet-milling, cracking and/or dehulling, the one or more batches of crops, and separating a lignocellulosic biomass stream from a protein source stream, wherein (i) the lignocellulosic biomass used in step (a) is derived from the lignocellulosic biomass stream obtained in step ($\alpha$2) and (ii) the protein source used in step (c) is derived from the protein source stream obtained in step ($\alpha$2).

Item 4. The process according to any one of the preceding Items, wherein the reaction between the monomeric reducing sugars and the one or more proteins is a Maillard reaction.

Item 5. The process according to any one of the preceding Items, wherein subjecting the blend obtained from step (c) to heat in step (d) induces non-enzymatic browning of the mixture obtained from (c).

Item 6. The process according to any one of the preceding items, wherein the lignocellulosic biomass has a hemicellulose content of at least 1% w/w, dry matter, preferably at least 5% w/w, more preferably at least 10 w/w.

Item 7. The process according to any one of the preceding Items, wherein the cellulose fibers comprised in the mixture obtained in step (a) are cellulose fibers with increased digestible energy compared to that of the fibers in the lignocellulosic biomass.

Item 8. The process according to any one of the preceding Items, wherein the crop is selected from legumes, cereals, and oil plants.

Item 9. The process according to Item 8, wherein the legumes are selected from beans and soybeans.

Item 10. The process according to Item 8, wherein the cereals are selected from oat, wheat, rise, barley, and corn.

Item 11. The process according to Item 8, wherein the oil plants are selected from rapeseed, linseed, oil palm and sunflower.

Item 12. The process according to any one of the preceding Items, wherein steps (a)-(d) are performed at the same production site.

Item 13. The process according to any one of the preceding Items, wherein steps ($\alpha$) and (a)-(d) are performed at the same production site.

Item 14. The process according to any one of the preceding Items, wherein the lignocellulosic biomass has a hemicellulose content, preferably a pentose polysaccharide content, more preferably a xylan content, of at least 1% w/w, dry matter, preferably at least 5% w/w, more preferably at least 10 w/w, and a lignin content of 5% w/w to 40% w/w.

Item 15. The process according to any one of the preceding Items, wherein the lignocellulosic biomass comprises or consists of one or more members of the group consisting of: legume shells, hulls, pods, stalks or leaves, preferably soybean hulls; peanut shells; oil seed shells, hulls, pods, husks, leaves, straw or stalks, preferably rapeseed pods or rapeseed straw; sesame stalks; sunflower stalks; palm kernel shells; empty fruit bunch; coconut shells or coconut husks; cereal hulls, bran, cobs, leaves, stalks or straw, preferably corn stover or corn cobs; oat hulls; rice hulls; barley straw; wheat bran; wheat straw; sorghum bagasse.

Item 16. The process according to any one of the preceding Items, wherein the hydrolysis of step (a) is acid hydrolysis or enzymatic hydrolysis.

Item 17. The process according to any one of the preceding Items, wherein the hydrolysis of step (a) is acid hydrolysis and a mineral acid and/or a gas is used as the acidic component, preferably wherein the mineral acid is hydrochloric acid or sulfuric acid and the gas is sulfur dioxide.

Item 18. The process according to any one of the preceding Items, wherein the hydrolysis of step (a) is enzymatic hydrolysis and glucoside hydrolases, preferably xylanases (EC 3.2.1.8), are used.

Item 19. The process according to any one of the preceding Items, wherein the mixture obtained in step (a) comprises

(i) pentoses, preferably xylose and/or arabinose, more preferably D-xylose and/or arabinose, and
(ii) hexoses, preferably mannose and/or galactose and/or glucose.

Item 20. The process according to any one of the preceding Items, wherein the hydrolysis is performed in a manner that maximizes the yield of xylose and minimizes the degradation of xylose to furfural.

Item 21. The process according to any one of the preceding Items, wherein the hydrolysis step (a) includes a combination of (i) acid hydrolysis, preferably dilute acid hydrolysis using diluted sulfuric acid, together with (ii) steam explosion and/or sulfite treatment and/or enzymatic hydrolysis

Item 22. The process according to any one of the preceding Items, wherein the process comprises step (b), i.e. step (b) is performed.

Item 23. The process according to Item 22, wherein one or more alkali metal hydroxides and/or one or more alkaline metal hydroxides are used for adjusting the pH, preferably wherein the alkali metal hydroxides are selected from sodium hydroxide and potassium hydroxide, and the alkaline metal hydroxides are selected from magnesium hydroxide and calcium hydroxide, further preferably magnesium hydroxide is used for adjusting the pH.

Item 24. The process according to Item 22 or 23, wherein one or more members of the group consisting of sodium ions, potassium ions, magnesium ions, and calcium ions are introduced into the mixture obtained from step (a), wherein preferably magnesium ions are introduced into the mixture obtained from step (a).

Item 25. The process according to any one of Items 22-24, wherein the mixture obtained from step (b) has a magnesium ion content of at least 50 ppm.

Item 26. The process according to any one of Items 22-25, wherein the mixture obtained from step (b) mainly consists of reducing sugars, unhydrolyzed cellulose fibers, and mineral salts, wherein mainly consists means more than 80% w/w, dry matter, preferably more than 90% w/w, more preferably more than 95% w/w.

Item 27. The process according to any one of the preceding Items, wherein the ruminant feed or supplement for a ruminant feed obtained from step (d) has a dietary cation-anion difference (DCAD) of 20 to 60 meq/100g dietary dry mass, preferably 25 to 55 meq/100g dietary dry mass, more preferably 30 to 50 meq/100g dietary dry mass.

Item 28. The process according to any one of the preceding Items, wherein the ruminant feed or supplement for a ruminant feed obtained from step (d) comprises potassium ions and sodium ions in an atomic ratio of potassium :sodium of between 1:1 and 5:1, preferably between 1.5:1 and 4:1, more preferably between 1.8:1 and 3.6:1.

Item 29. The process according to any one of the preceding Items, wherein the ruminant feed or supplement for a ruminant feed obtained from step (d) comprises potassium ions and magnesium ions in a weight ratio of between 3:1 and 5:1, preferably between 3.5:1 and 4.5:1, more preferably between 3.7:1 and 3:1.

Item 30. The process according to any one of the preceding Items, wherein the protein source comprises or consists of one or more members of the group consisting of: legume meals, preferably bean meal, more preferably soybean meal; peanut meal; oil seed meals or cakes, preferably rapeseed meal; cottonseed meal; linseed meal; safflower meal; sesame meal; sunflower seed meal; palm kernel cake; copra; cereals, barley; oat, corn; wheat; milo; sorghum; by-product protein feedstuffs, preferably corn gluten feed; distiller's grains; brewers' spent grain; silages; hays; alfalfa.

Item 31. The process according to any one of the preceding Items, wherein the protein source comprises or consists of bean meal, preferably soybean meal.

Item 32. The process according to any one of the preceding Items, wherein the one or more proteins comprised in the protein source comprise lysine and wherein the blend obtained from step (c) comprises a molar ratio of reducing sugars to lysine of 0.3:1 to 1:1.

Item 33. The process according to any one of the preceding Items, wherein the reducing sugars are pentoses, preferably xylose and/or arabinose, more preferably D-xylose and/or arabinose, and the one or more proteins comprised in the protein source comprise lysine, and wherein the molar ratio of pentose to lysine is at least 1.

Item 34. The process according to any one of the preceding Items, wherein step (d) is performed at a temperature of 20 to 150 °C, preferably 70 to 120 °C, more preferably 85 to 105 °C.

Item 35. The process according to any one of the preceding Items, wherein step (d) is performed for a time period of 20 minutes to 72 hours, preferably 40 minutes to 8 hours, more preferably 1 hour to 4 hours.

Item 36. The process according to any one of the preceding Items, wherein the blend obtained from step (c) that is subjected to heat treatment in step (d) has a moisture content of 6% to 40%, preferably 10% to 32%, more preferably 15% to 25%.

Item 37. The process according to any one of the preceding Items, wherein the mixture obtained from step (a) is not subjected to separation, fractionation, or purification before it is subjected to step (b) or step (c).

Item 38. The process according to any one of the preceding Items, wherein no spent sulfite liquor or dried spent sulfite liquor is used in the process.

Item 39. The process according to any one of the preceding Items, wherein no formaldehyde is used in the process.

Item 40. The process according to any one of the preceding Items, wherein step (b) is absent and no other step is performed between steps (a) and (c).

Item 41. The process according to any one of the preceding Items, wherein step (b) is absent and no other step is performed between steps (c) and (d).

Item 42. The process according to any one of the preceding Items, wherein step (b) is present and no other step is performed between steps (a) and (b).

Item 43. The process according to any one of the preceding Items, wherein step (b) is present and no other step is performed between steps (b) and (c).

Item 44. The process according to any one of the preceding Items, wherein step (b) is present and no other step is performed between steps (c) and (d).

Item 45. The process according to any one of the preceding Items, wherein no other step is performed between steps (c) and (d).

Item 46. A ruminant feed or a supplement for a ruminant feed obtained by the process of any one of Items 1-45.

## EXAMPLES

The process of the present invention was implemented into a conventional soybean processing plant. In particular, a facility for weak acid hydrolysis and neutralization has been added to a conventional soybean processing plant, making it possible to produce rumen bypass protein without external sourcing of reducing sugar additives.

Raw soybeans were provided and then cleaned, cracked, and dehulled according to means known in the art. The soybean hulls were separated from the soybeans to provide a soybean hull feed and a soybean feed. The soybean feed was subjected to a conditioning, flaking, and solvent extraction step to provide for an extracted soybean meal and a crude soybean oil. The crude soybean oil can be subjected to further refining steps. At the same time, the soybean hull feed was subjected to weak acid hydrolysis followed by neutralization. The extracted soybean meal was then combined with the product mixture obtained from the weak acid hydrolysis and neutralization step and subjected to a heat treatment step, thereby inducing a reaction between the monomeric reducing sugars and the one or more proteins. The obtained product can directly be used as a ruminant feed or can be combined with further ingredients and used as a supplement for a ruminant feed.

## Claims

1. A process for the production of a ruminant feed or a supplement for a ruminant feed, the process comprising the following steps:

(a) subjecting lignocellulosic biomass to hydrolysis, thereby producing a mixture comprising monomeric reducing sugars and cellulose fibers;
(b) optionally (i) adjusting the pH of the mixture obtained from step (a) to a pH of between 4.0 and 10.5, preferably between 6.0 and 9.5, more preferably between 7.0 and 9.5, even more preferably between 7.0 and 8.5, and/or (ii) introducing alkali metal cations and/or alkaline earth metal cations into the mixture obtained from step (a);
(c) blending the mixture obtained from step (a) or the mixture obtained from step (b) with a protein source comprising one or more protein(s);
(d) subjecting the blend obtained from step (c) to heat, thereby inducing a reaction between the monomeric reducing sugars and the one or more protein(s) and thereby producing the ruminant feed or supplement for a ruminant feed,

wherein the lignocellulosic biomass and the protein source stem from the same species of crop.

2. The process according to claim 1, wherein the process further comprises a step ($\alpha$) performed prior to step (a), wherein step ($\alpha$) comprises the following steps:

> ($\alpha$1) providing one or more batches of crops, preferably one batch of crops;
> ($\alpha$2) mechanically disintegrating, preferably threshing, winnowing, milling, wet-milling, cracking and/or dehulling, the one or more batches of crops, and separating a lignocellulosic biomass stream from a protein source stream,

> wherein (i) the lignocellulosic biomass used in step (a) is derived from the lignocellulosic biomass stream obtained in step ($\alpha$2) and (ii) the protein source used in step (c) is derived from the protein source stream obtained in step ($\alpha$2).

3. The process according to any one of the preceding claims, wherein the lignocellulosic biomass has a hemicellulose content of at least 1% w/w, dry matter, preferably at least 5% w/w, more preferably at least 10 w/w.

4. The process according to any one of the preceding claims, wherein the cellulose fibers comprised in the mixture obtained in step (a) are cellulose fibers with increased digestible energy compared to that of the fibers in the lignocellulosic biomass.

5. The process according to any one of the preceding claims, wherein the crop is selected from legumes, cereals, and oil plants.

6. The process according to claim 5, wherein the legumes are selected from beans and soybeans; the cereals are selected from oat, wheat, rise, barley, and corn and the oil plants are selected from rapeseed, linseed, oil palm and sunflower.

7. The process according to any one of the preceding claims, wherein steps (a)-(d) are performed at the same production site, or wherein step ($\alpha$) and steps (a)-(d) are performed at the same production site.

8. The process according to any one of the preceding claims, wherein the lignocellulosic biomass has a hemicellulose content, preferably a pentose polysaccharide content, more preferably a xylan content, of at least 1% w/w, dry matter, preferably at least 5% w/w, more preferably at least 10 w/w, and a lignin content of 1% w/w to 50% w/w.

9. The process according to any one of the preceding claims, wherein the lignocellulosic biomass comprises or consists of one or more members of the group consisting of: legume shells, hulls, pods, stalks or leaves, preferably soybean hulls; peanut shells; oil seed shells, hulls, pods, husks, leaves, straw or stalks, preferably rapeseed pods or rapeseed straw; sesame stalks; sunflower stalks; palm kernel shells; empty fruit bunch; coconut shells or coconut husks; cereal hulls, bran, cobs, leaves, stalks or straw, preferably corn stover or corn cobs; oat hulls; rice hulls; barley straw; wheat bran; wheat straw; sorghum bagasse.

10. The process according to any one of the preceding claims, wherein the hydrolysis of step (a) is acid hydrolysis and a mineral acid and/or a gas is used as the acidic component, preferably wherein the mineral acid is hydrochloric acid or sulfuric acid and the gas is sulfur dioxide.

11. The process according to any one of the preceding claims, wherein the process comprises step (b), i.e. step (b) is performed,

> preferably wherein one or more alkali metal hydroxides and/or one or more alkaline metal hydroxides are used for adjusting the pH,
> further preferably wherein the alkali metal hydroxides are selected from sodium hydroxide and potassium hydroxide, and the alkaline metal hydroxides are selected from magnesium hydroxide and calcium hydroxide,
> even more preferably magnesium hydroxide is used for adjusting the pH.

12. The process according to claim 11, wherein the mixture obtained from step (b) has a magnesium ion content of at least 50 ppm.

13. The process according to any one of the preceding claims, wherein the protein source comprises or consists of one or more members of the group consisting of:

> legume meals, preferably bean meal, more preferably soybean meal; peanut meal; oil seed meals or cakes, preferably rapeseed meal; cottonseed meal; linseed meal; safflower meal; sesame meal; sunflower seed meal; palm kernel cake; copra; cereals, barley; oat, corn; wheat; milo; sorghum; by-product protein feedstuffs, preferably corn gluten feed; distiller's grains; brewers' spent grain; silages; hays; alfalfa,
wherein the protein source preferably comprises or consists of bean meal, preferably soybean meal.

**14.** A ruminant feed or a supplement for a ruminant feed obtained by the process of any one of claims 1-13.

Raw soybeans

Cleaning, cracking, dehulling → Soybean hulls → **Weak acid hydrolysis, neutralization**

Cracked soybeans

Conditioning, flaking, solvent extraction → Extracted soybean meal → Heat treatment

Crude soybean oil

Rumen bypass protein

**Fig. 1**

EP 4 201 221 A1

Europäisches
Patentamt

European
Patent Office

Office européen
des brevets

# EUROPEAN SEARCH REPORT

Application Number

EP 21 21 7557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/152755 A1 (LEBO STUART E [US] ET AL) 26 June 2008 (2008-06-26) * example 1 * ----- | 1-14 | INV. A23K10/30 A23K10/37 A23K20/147 A23K20/163 A23K50/10 |
| Y | HUA-MIN LIU ET AL: "Application and Conversion of Soybean Hulls", 3 May 2017 (2017-05-03), SOYBEAN – THE BASIS OF YIELD, BIOMASS AND PRODUCTIVITY, INTECH OPEN, PAGE(S) 111 – 132, XP009526114, ISBN: 978-953-51-3117-5 * page 112 – page 1 * * page 116 – page 3 * ----- | 1-14 | |
| A | ANA CASSALES ET AL: "Optimization of soybean hull acid hydrolysis and its characterization as a potential substrate for bioprocessing", BIOMASS AND BIOENERGY, PERGAMON, AMSTERDAM, NL, vol. 35, no. 11, 29 September 2011 (2011-09-29), pages 4675-4683, XP028120972, ISSN: 0961-9534, DOI: 10.1016/J.BIOMBIOE.2011.09.021 [retrieved on 2011-10-10] * page 4676 * ----- | 1-14 | |
| A | CA 2 601 889 A1 (ARCHER DANIELS MIDLAND CO [US]) 28 September 2006 (2006-09-28) * examples 5,6 * ----- | 1-14 | |

TECHNICAL FIELDS SEARCHED (IPC)

A23K

The present search report has been drawn up for all claims

| Place of search | Date of completion of the search | Examiner |
|---|---|---|
| The Hague | 6 July 2022 | Rooney, Kevin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 7557

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2022

| Patent document cited in search report | | Publication date | Patent family member(s) | | Publication date |
|---|---|---|---|---|---|
| US 2008152755 | A1 | 26-06-2008 | AT | 471080 T | 15-07-2010 |
| | | | AU | 2007336847 A1 | 03-07-2008 |
| | | | BR | PI0721146 A2 | 16-09-2014 |
| | | | CA | 2669018 A1 | 03-07-2008 |
| | | | CN | 101605465 A | 16-12-2009 |
| | | | DK | 2124618 T3 | 18-10-2010 |
| | | | EP | 2124618 A1 | 02-12-2009 |
| | | | ES | 2349890 T3 | 12-01-2011 |
| | | | JP | 2010514415 A | 06-05-2010 |
| | | | PL | 2124618 T3 | 30-11-2010 |
| | | | PT | 2124618 E | 22-09-2010 |
| | | | RU | 2009128058 A | 27-01-2011 |
| | | | SI | 2124618 T1 | 30-11-2010 |
| | | | US | 2008152755 A1 | 26-06-2008 |
| | | | WO | 2008079942 A1 | 03-07-2008 |
| CA 2601889 | A1 | 28-09-2006 | CA | 2601889 A1 | 28-09-2006 |
| | | | CN | 101179949 A | 14-05-2008 |
| | | | EP | 1865792 A2 | 19-12-2007 |
| | | | US | 2006216396 A1 | 28-09-2006 |
| | | | WO | 2006102216 A2 | 28-09-2006 |

EPO FORM P0459

For more details about this annex : see Official Journal of the European Patent Office, No. 12/82